# EUROPÄISCHE PATENTSCHRIFT

(11) **EP 1 767 611 B1**
(45) Veröffentlichungstag und Bekanntmachung des Hinweises auf die Patenterteilung: **24.11.2010**
(21) Anmeldenummer: 06018635.0
(22) Anmeldetag: 06.09.2006
(51) Int. Cl.: C10L 1/198, C10L 10/16, C10L 10/18, B01D 17/05, C09K 8/524, C10G 33/04

(54) **Additiv für Rohöle**
Additive for crude oils.
Additif pour pétroles bruts.

(30) Priorität: 22.09.2005 DE 102005045133
(43) Veröffentlichungstag der Anmeldung: 28.03.2007
(73) Patentinhaber: Clariant Produkte (Deutschland) GmbH, 65929 Frankfurt am Main (DE)
(72) Erfinder: Cohrs, Carsten, Dr., 84489 Burghausen (DE); Krull, Matthias, Dr., 55296 Harxheim (DE); Feustel, Michael, Dr., 55278 Köngernheim (DE); Rausch, Heidi, 84518 Garching/Alz (DE)
(74) Vertreter: Mikulecky, Klaus

(56) Entgegenhaltungen:
- EP-A- 1 044 996
- WO-A-01/96503
- WO-A-93/14178
- WO-A-98/40158
- WO-A-02/064706
- GB-A- 1 173 975
- GB-A- 2 305 437
- US-A- 2 499 368
- US-A- 4 537 701
- US-A- 6 120 678

## Beschreibung

Die vorliegende Erfindung betrifft Alkylphenol-Aldehyd-Harze, welche Struktureinheiten von Fettsäuren bzw. deren Derivaten enthalten, und die verbesserte anwendungstechnische Eigenschaften als Additive für Rohöle aufweisen.

Rohöle sind komplexe Gemische verschiedenartiger Substanzen, von denen einige während Produktion, Transport, Lagerung und/oder Weiterverarbeitung Probleme bereiten können. So enthält frisch gefördertes Rohöl eine größere Menge emulgiertes Wasser, das vor Transport und Lagerung abgetrennt werden muss. Manche Rohöle wie auch davon abgeleitete Produkte, wie zum Beispiel schweres Heizöl oder Schiffsdiesel, enthalten Kohlenwasserstoffwachse, die bei niedrigen Temperaturen ausfallen und die Fließfähigkeit der Öle, zum Beispiel beim Transport in Pipelines, beeinträchtigen. Oftmals enthalten Rohöl und davon abgeleitete Produkte auch Asphaltene, die sich aus einer Vielzahl von Strukturen, besonders hochmolekularen, kondensierten aromatischen Systemen mit Heteroatomen, zusammensetzen und als kolloidale Suspension im Öl vorliegen. Angesichts der Komplexität ihrer Chemie werden Asphaltene als die Ölfraktion beschrieben, die in Toluol, aber nicht in n-Pentan löslich ist. Diese Asphaltene können zum Beispiel bei Druckschwankungen oder bei Verdampfen leichter flüchtiger Bestandteile des Öls ausfallen. Des gleichen können Asphaltene ausfallen, wenn zum Beispiel Bitumen, Schwer- und Rückstandsöle zwecks Absenkung der Viskosität für den Transport mit Lösemittel verdünnt werden. Ausgefallene Asphaltene verursachen Probleme bei der Produktion und bei der Verarbeitung von Rohölen und davon abgeleiteten Produkten indem sie sich in Ventilen, Rohren und Fördereinrichtungen niederschlagen. An heißen Oberflächen, wie beispielsweise Wärmetauschern, kann die Carbonisierung dieser Niederschläge ihre Entfernung sehr schwierig machen. Die Niederschläge aus Asphaltenen und/oder Wachsen reduzieren den Wirkungsgrad von Anlagen und können im schlimmsten Fall zu einer kompletten Blockierung und zu einem Produktionsstopp führen, was hohe Kosten verursacht.

Daher werden bei Produktion und Verarbeitung von Rohöl verschiedenartige Additive eingesetzt. Dabei handelt es sich vorwiegend um synthetische Monomere wie auch polymere Verbindungen.

So werden zum Beispiel Demulgatoren zur Spaltung von Emulsionen, wie sie bei der Förderung von Rohölen anfallen, eingesetzt. Die durch Asphaltenniederschläge hervorgerufenen Probleme bei der Handhabung und Lagerung von Ölen können durch Zusatz kleiner Mengen so genannter Dispergatoren verhindert oder verringert werden. Diese Dispergatoren sollen dabei durch Reduktion der Asphaltenagglomeration die Menge an Niederschlag verringern, die Bildung von Niederschlägen verlangsamen, eine feinere Verteilung des Niederschlages bewirken und/oder die Neigung des Niederschlages, sich auf Oberflächen abzulagern reduzieren. So genannte Paraffininhibitoren verbessern die Kaltfließfähigkeit z.B. durch Modifizierung der Kristallstruktur der bei Abkühlung ausfallenden Paraffine. Sie verhindern die Ausbildung eines dreidimensionalen Netzwerks aus Paraffinkristallen und führen so zu einer Absenkung des Stockpunkts.

Eine für verschiedene Zwecke in Rohölen eingesetzte Verbindungsklasse sind Alkylphenolharze und deren Derivate, die durch Kondensation von Alkylphenolen mit Aldehyden unter sauren bzw. basischen Bedingungen hergestellt werden.

Oftmals ist die Wirkung der bekannten Öladditive jedoch unbefriedigend. Da Rohöle und daraus hergestellte Produkte in ihrer Zusammensetzung variieren, können einzelne Additive nur in einem beschränkten Bereich wirksam arbeiten. Manchmal haben sogar kleine Änderungen in der Ölzusammensetzung einen großen Effekt auf die Wirksamkeit der Additive. Deshalb ist in einigen Fällen die Wirkung der bekannten Alkylphenolharze nicht zufrieden stellend, so dass ein Bedarf an zusätzlichen Alternativen besteht. Insbesondere in schweren Rohölen bzw. davon abgeleiteten Produkten mit hohem Asphaltengehalt sowie gleichzeitig hohem Gehalt an n-Paraffinen ist die Wirksamkeit der Alkylphenolharze des Standes der Technik nicht ausreichend.

Üblicherweise wird die Kondensationsreaktion zur Herstellung von Alkylphenolharzen in höher siedenden aromatischen Lösemitteln durchgeführt. Des weiteren müssen Alkylphenolharze, bei denen es sich per se um hochviskose bzw. spröde Polymere handelt, für die Verwendung als Öladditive in einem Lösemittel gelöst werden. Auf Grund der physikochemischen Eigenschaften der Alkylphenolharze sind sowohl für die Kondensation als auch für die Herstellung von Konzentraten höher siedende aromatische Kohlenwasserstoffe bzw. technische Kohlenwasserstoffgemische bevorzugt. Diese enthalten typischerweise 10 Gew.-% und mehr an polyaromatischen Kohlenwasserstoffen. Aliphatische Kohlenwasserstoffe sind auf Grund ihrer Löseeigenschaften für Alkylphenolharze ungeeignet.

Bei den derzeit als Reaktionsmedium wie auch als Lösemittel für Alkylphenolharze eingesetzten Lösemitteln handelt es sich in der Regel um höher siedende, aromatenreiche Fraktionen aus der Destillation von Rohöl. Sie enthalten polyzyklische aromatischen Kohlenwasserstoffe, die als schädlich für die Gesundheit von Lebewesen und für die Umwelt angesehen werden. Daher wird der Gehalt von Additiven an polyzyklischen aromatischen Kohlenwasserstoffen insbesondere bei offshore-Anwendungen immer kritischer betrachtet und eingeschränkt. Die gesundheitlichen Bedenken gegenüber den auch als Polyaromaten bezeichneten polyzyklischen aromatischen Kohlenwasserstoffen wie beispielsweise Naphthalin, das unter dem Verdacht steht Krebs zu erzeugen, verursachen eine Suche nach Wegen zur Verminderung dieser Substanzen in technischen Produkten. Unter polyaromatischen Kohlenwasserstoffen werden hier Verbindungen verstanden, die mindestens zwei annellierte aromatische Ringe enthalten.

US 2499368 offenbart die Verwendung von oxalkylierten Alkylphenolharzen als Demulgatoren für Mineralölemulsionen

GB 1 173 975 offenbart die Verwendung von Alkylphenolharzen zur Absenkung der Viskosität von Rohölen und Brennstoffölen bei niedriger Temperatur. GB 2 305 437 offenbart Alkylphenolharze zur Absenkung des Pour Points von paraffinhaltigen Flüssigkeiten.

US-5 021 498 offenbart Alkylphenol-Formaldehydharze als Asphaltendispergatoren.

EP-A-0 381 966 offenbart ein Verfahren zur Herstellung von Novolaken durch Kondensation von Phenolen mit Aldehyden unter azeotropem Auskreisen von Wasser.

Im Rahmen der vorliegenden Erfindung werden unter Alkylphenolharzen alle Polymere verstanden, die durch Kondensation eines Alkylreste tragenden Phenols mit Aldehyden bzw. Ketonen zugänglich sind. Der Alkylrest kann dabei direkt über eine C-C-Bindung an den Arylrest des Phenols gebunden sein oder auch über funktionelle Gruppen wie Ester oder Ether. Das Phenol und das Alkylphenolharz können alkoxiliert sein.

Aufgabe der vorliegenden Erfindung war es somit, Rohöle mit verbesserten Eigenschaften bereitzustellen. Da die zur Verbesserung von Rohöleigenschaften eingesetzten Additive in der Regel am Bohrloch und damit auch in zunehmendem Maße auf See angewendet werden, galt es zudem ein Additiv zu finden, das im wesentlichen frei von monomeren bzw. niedermolekularen polyaromatischen Verbindungen ist.

Es wurde gefunden, dass die Kondensation von Alkylphenolen mit Aldehyden in Gegenwart von Fettsäuren mit 2-50 C-Atomen bzw. deren Derivaten wie beispielsweise Estern mit Alkoholen mit 1 bis 10 C-Atomen und 1 bis 5 OH-Gruppen zu Harzen mit verbesserten anwendungstechnischen Eigenschaften als Additive für Rohöle und davon abgeleitete Produkte führt. Insbesondere gewährleisten sie eine effizientere Spaltung von Emulsionen, eine verbesserte Asphaltendispergierung sowie ein verbessertes Kaltfließverhalten. Gleichzeitig sind die genannten Fettsäuren und deren Derivate geeignete Lösemittel zur Herstellung von Additivkonzentraten und erlauben die Herstellung von Additivkonzentraten, die frei von polyzyklischen aromatischen Kohlenwasserstoffen sind und damit bei unbeabsichtigter Freisetzung nicht zu Umweltbelastungen führen.

Gegenstand der Erfindung sind somit Rohöle und daraus hergestellte, Destillationsrückstände enthaltende Produkte, enthaltend mindestens ein Alkylphenol-Aldehydharz mit einer repetitiven Struktureinheit der Formel 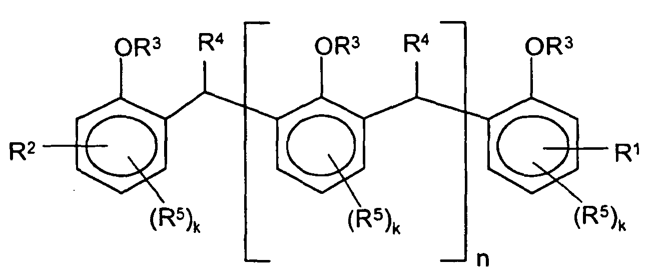 worin
- R¹: für einen verzweigten Alkyl- oder Alkenylrest mit 10 bis 40 C-Atomen steht, der mindestens eine Carboxyl-, Carboxylat- und/oder Estergruppe trägt,
- R²: für Wasserstoff oder R¹
- R³: für Wasserstoff oder eine Alkoxygruppe der Formel

-(A-O)ₘ-H,
- A: für eine C₂- bis C₄-Alkylengruppe,
- m: für eine Zahl von 1 bis 100,
- R⁴: für Wasserstoff, einen C₁- bis C₁₁-Alkylrest oder eine Carboxylgruppe,
- R⁵: für C₁-C₂₀₀-Alkyl oder-Alkenyl, O-R⁶ oder O-C(O)-R⁶,
- R⁶: für C₁-C₂₀₀-Alkyl oder-Alkenyl,
- n: für eine Zahl von 1 bis 100 und
- k: für 1 oder 2 steht.

Ein weiterer Gegenstand der Erfindung ist die Verwendung des erfindungsgemäßen Alkylphenol-Aldehydharzes zur Spaltung von Emulsionen aus Wasser und Rohölen oder davon abgeleiteten, Destillationsrückstände enthaltenden Produkten.

Ein weiterer Gegenstand der Erfindung ist die Verwendung des erfindungsgemäßen Alkylphenol-Aldehydharzes zur Verbesserung der Kaltfließfähigkeit von Rohölen und davon abgeleiteten, Destillationsrückstände enthaltenden Produkten.

Ein weiterer Gegenstand der Erfindung ist die Verwendung des erfindungsgemäßen Alkylphenol-Aldehydharzes als Asphaltendispergator in Rohölen und davon abgeleiteten, Destillationsrückstände enthaltenden Produkten.

A steht vorzugsweise für eine Ethylen- und/oder Propylengruppe, insbesondere für eine Ethylengruppe.

m steht vorzugsweise für eine Zahl von 2 bis 50, insbesondere von 3 bis 20.

R⁴ steht vorzugsweise für Wasserstoff oder C₁- bis C₃-Alkyl, insbesondere für Wasserstoff.

R⁶ steht bevorzugt für C₄-C₅₀-Alkyl oder -Alkenyl und insbesondere für C₆-C₃₀-Alkyl oder -Alkenyl. Besonders bevorzugt steht R⁵ für C₄-C₅₀-Alkyl oder -Alkenyl und insbesondere für C₆-C₃₀-Alkyl oder -Alkenyl.

Bevorzugt steht n für eine Zahl von 2 bis 50 und speziell für eine Zahl von 3 bis 25 wie beispielsweise eine Zahl von 5 bis 15.

k steht vorzugsweise für 1. Weiterhin ist es bevorzugt, dass k gleich 1 ist, und R⁵ in para-Stellung zur OR³-Gruppe steht.

R¹ steht bevorzugt für einen C₁₂-C₂₄-Alkyl- oder Alkenylrest und insbesondere für einen C₁₆-C₂₀-Alkyl- oder Alkenylrest. Bevorzugt ist der Rest R¹ über ein sekundäres C-Atom der Alkylkette an das aromatische Ringsystem gebunden. Diese Bindung resultiert aus der Alkylierung des Phenols über eine Doppelbindung der ungesättigten Fettsäure bzw. des ungesättigten Fettsäurederivats, wodurch ihre Position innerhalb der Seitenkette bestimmt ist. Bevorzugt ist der Rest R¹ gesättigt. In einer weiteren bevorzugten Ausführungsform enthält der Rest R¹ eine oder zwei Doppelbindungen, insbesondere eine Doppelbindung. Bevorzugt trägt der Rest R¹ eine endständige Carboxylgruppe. In einer weiteren bevorzugten Ausführungsform trägt der Rest R¹ eine endständige Estergruppierung, deren Alkoholkomponente sich von einem Alkohol mit 1 bis 5 C-Atomen und 1 bis 6 OH-Gruppen ableitet. Besonders bevorzugt leitet sich dieser Ester von Alkoholen mit 1 bis 4 C-Atomen wie beispielsweise Methanol, Ethanol und Propanol ab.

Im erfindungsgemäßen Alkylphenolharz befindliche Carbonsäuregruppen können nach der Kondensation ganz oder teilweise wie beispielsweise zu 90 %, zu 70 %, zu 50 %, zu 25 % oder zu 10 % neutralisiert werden. Bevorzugt erfolgt diese Neutralisation mit Ammoniak, Aminen oder aromatischen Basen. Geeignete Amine sind primäre, sekundäre und tertiäre Amine deren Alkylreste unabhängig voneinander 1 bis 24 C-Atome, bevorzugt 4 bis 22 C-Atome tragen. Des gleichen sind zur Neutralisation aromatische Basen geeignet, die ein zyklisches, durchkonjugiertes Kohlenwasserstoffgerüst mit 4n+2 π-Elektronen sowie mindestens ein zur Salzbildung befähigtes Heteroatom, bevorzugt Stickstoff, enthalten wie beispielsweise Pyridin und Imidazol.

Im erfindungsgemäßen Alkylphenolharz befindliche Carbonsäuregruppen können nach der Kondensation ganz oder teilweise wie beispielsweise zu 90 %, zu 70 %, zu 50 %, zu 25 % oder zu 10 % mit Alkylenoxiden umgesetzt werden. Geeignete Alkylenoxide sind Ethylenoxid, Propylenoxid, Butylenoxid und deren Mischungen. Die Oxalkylierung erfolgt bevorzugt mit 1 bis 100, insbesondere mit 5 bis 20 mol Alkylenoxid pro Carbonsäuregruppe. Bei Mischungen verschiedener Alkylenoxide können je nach dem zu additivierenden Öl sowohl statistische Copolymere wie auch Blockcopolymere bevorzugt sein.

Die erfindungsgemäßen Alkylphenol-Aldehydharze sind beispielsweise durch Kondensation der entsprechenden Alkylphenole mit einem Aldehyd oder Keton, beispielsweise Formaldehyd, d.h. vorzugsweise 0,5 bis 1,5 Mol, insbesondere 0,8 bis 1,2 Mol Aldehyd oder Keton pro Mol Alkylphenol zugänglich, wobei die Kondensation in Gegenwart einer Fettsäure oder eines Fettsäurederivats, bevorzugt eines Fettsäurealkylesters erfolgt. Die Kondensation wird bevorzugt in Gegenwart von 1 bis 70 Gew.-%, bevorzugt 3 bis 60 Gew.-%, insbesondere 5 bis 50 Gew.-% der Fettsäure bzw. des Fettsäureesters bezogen auf die Gesamtmenge an Alkylphenol, Aldehyd oder Keton und Fettsäure bzw. -ester durchgeführt. Fettsäure bzw. Fettsäureester können dabei bei geringen Konzentrationen wie beispielsweise 1 bis 10 Gew.-% und bevorzugt 2 bis 5 Gew.-% als Reagenz zugesetzt werden, besonders bevorzugt werden sie jedoch in größeren Mengen von 10 bis 70 Gew.-% und speziell 20 bis 60 Gew.-% zugesetzt, wodurch die Viskosität des Reaktionsansatzes abgesenkt und damit seine Handhabbarkeit erleichtert wird. Überschüssige Fettsäure bzw. Fettsäurederivat können nach beendeter Reaktion z.B. durch Destillation abgetrennt werden; bevorzugt verbleiben sie aber im Harz.

Bevorzugt enthalten die erfindungsgemäßen Alkylphenolharze und die sie enthaltenden Öle 0,2 bis 5 Gewichtsteile, besonders bevorzugt 0,3 bis 3 Gewichtsteile wie beispielsweise 0,5 bis 2 Gewichtsteile mindestens einer Fettsäure bzw. eines Fettsäurederivats, speziell eines Fettsäureesters pro Gewichtsteil Alkylphenolharz.

Die Kondensation erfolgt bevorzugt zwischen 70 und 200 °C wie beispielsweise zwischen 90 und 160 °C. Sie wird üblicherweise durch 0,05 bis 5 Gew.-% Basen oder Säuren katalysiert. Als Katalysatoren für die Kondensationsreaktionen von Alkylphenol und Aldehyd sind neben Carbonsäuren wie Essigsäure und Oxalsäure insbesondere starke Mineralsäuren wie Salzsäure, Phosphorsäure und Schwefelsäure sowie Sulfonsäuren gebräuchliche Katalysatoren. Besonders geeignete Katalysatoren sind Sulfonsäuren, die mindestens eine Sulfonsäuregruppe und mindestens einen gesättigten oder ungesättigten, linearen, verzweigten und/oder cyclischen Kohlenwasserstoffrest mit 1 bis 40 C-Atomen und bevorzugt mit 3 bis 24 C-Atomen enthalten. Besonders bevorzugt sind aromatische Sulfonsäuren, speziell alkylaromatische Mono-Sulfonsäuren mit einem oder mehreren C₁-C₂₈-Alkylresten und insbesondere solche mit C₃-C₂₂-Alkylresten. Bevorzugt tragen die alkylaromatischen Sulfonsäuren ein oder zwei, insbesondere einen Alkylrest. Die zu Grunde liegenden Arylgruppen sind bevorzugt mono- und bizyklisch, insbesondere monozyklisch. In einer bevorzugten Ausführungsform tragen die Arylgruppen keine Carboxylgruppen und speziell tragen sie nur Sulfonsäure- und Alkylgruppen. Geeignete Beispiele sind Methansulfonsäure, Butansulfonsäure, Benzolsulfonsäure, p-Toluolsulfonsäure, Xylolsulfonsäure, 2-Mesitylensulfonsäure, 4-Ethylbenzolsulfonsäure, Isopropylbenzolsulfonsäure, 4-Butylbenzolsulfonsäure, 4-Octylbenzolsulfonsäure; Dodecylbenzolsulfonsäure, Didodecylbenzolsulfonsäure, Naphthalinsulfonsäure. Auch Mischungen dieser Sulfonsäuren sind geeignet. Üblicherweise verbleiben diese nach Beendigung der Reaktion als solche oder in neutralisierter Form im Produkt.

Bevorzugt wird der für die Kondensation des Alkylphenolharzes eingesetzte saure Katalysator mit einer Base wie Natron- oder Kalilauge oder bevorzugt mit Aminen oder aromatischen Basen neutralisiert. Die Neutralisation erfolgt bevorzugt durch Umsetzung der als Katalysator eingesetzten Säure mit 0,8 bis 10 Mol Base, bevorzugt 0,9 bis 5 Mol Base, besonders bevorzugt 0,95 bis 2 Mol Base, wie beispielsweise etwa equimolar. Dabei wird insbesondere bei mehrbasischen Säuren und/oder Basen die Molzahl der insgesamt umgesetzten Säure- und Basengruppen betrachtet. Das gebildete Salz kann anschließend abgetrennt werden, bevorzugt verbleibt es jedoch im Alkylphenolharz.

Bevorzugt enthalten die erfindungsgemäßen Brennstofföle 1 bis 1.000 ppm, besonders bevorzugt 5 bis 150 und speziell 10 bis 100 ppm mindestens eines erfindungsgemäßen Alkylphenolharzes.

Erfindungsgemäß geeignet sind insbesondere solche Alkylphenol-Aldehydharze, die sich von Alkylphenolen mit ein oder zwei Alkylresten in ortho- und/oder para-Position zur OH-Gruppe ableiten. Besonders bevorzugt als Ausgangsmaterialien sind Alkylphenole, die am Aromaten zwei zur Kondensation mit Aldehyden befähigte Wasserstoffatome tragen und insbesondere monoalkylierte Phenole. Besonders bevorzugt befindet sich der Alkylrest in der para-Stellung zur phenolischen OH-Gruppe. Bevorzugt werden zur Herstellung der erfindungsgemäßen Alkylphenol-Aldehydharze Alkylphenole eingesetzt, die zu mindestens 50 mol-% aus p-Alkylphenolen bestehen, besonders bevorzugt aus mindestens 70 mol-% und speziell aus mehr als 90 mol-% wie beispielsweise aus mehr als 95 oder mehr als 97 mol-% p-Alkylphenolen bezogen auf die Gesamtheit der eingesetzten Alkylphenole bestehen. Der Anteil an trifunktionellen Phenolen, die über zwei ortho- und eine para-Position zur OH-Gruppe eine Kondensation mit Aldehyden eingehen können, ist bevorzugt unter 10 mol-% und insbesondere unter 5 mol-% wie beispielsweise unter 4 mol-% bezogen auf die Gesamtheit der eingesetzten Alkylphenole. Die Alkylreste (darunter werden für die Alkylphenole generell Kohlenwasserstoffreste gemäß nachstehender Definition verstanden) können bei den im erfindungsgemäßen Verfahren einsetzbaren Alkylphenol-Aldehyd-Harzen gleich oder verschieden sein, sie können gesättigt oder ungesättigt sein und besitzen 1 - 200, vorzugsweise 4 - 50, insbesondere 6-30 Kohlenstoffatome; bevorzugt handelt es sich um n-, iso- und tert.-Butyl-, n- und iso-Pentyl-, n- und iso-Hexyl-, n- und iso-Octyl-, n- und iso-Nonyl-, n- und iso-Decyl-, n- und iso-Dodecyl-, Tetradecyl-, Hexadecyl-, Octadecyl-, Eicosyl-, Tetracosyl-, Tripropenyl-, Tetrapropenyl-, Poly(propenyl)- und Poly(isobutenyl)reste. Bevorzugt sind diese Reste gesättigt.

Geeignete Alkylphenolharze können auch Struktureinheiten weiterer Phenolanaloga wie Salicylsäure, Hydroxybenzoesäure sowie deren Derivate wie Ester, Amide und/oder Salze enthalten oder aus ihnen bestehen.

Geeignete Aldehyde für die Herstellung der erfindungsgemäßen Alkylphenol-Aldehydharze sind solche mit 1 bis 12 Kohlenstoffatomen und vorzugsweise solche mit 1 bis 4 Kohlenstoffatomen wie beispielsweise Formaldehyd, Acetaldehyd, Propionaldehyd, Butyraldehyd, 2-Ethylhexanal, Benzaldehyd, Glyoxalsäure sowie deren reaktive Equivalente wie Paraformaldehyd und Trioxan. Besonders bevorzugt ist Formaldehyd in Form von Paraformaldehyd und insbesondere Formalin.

Die erfindungsgemäßen Alkylphenolharze haben bevorzugt mittels Gelpermeationschromatographie gegen Poly(styrol)-Standards in THF gemessene Molekulargewichte von 400 bis 25.000, bevorzugt von 600 bis 10.000 g/mol und speziell von 800 bis 5.000 g/mol. Die Polydispersität Mw/Mn liegt bevorzugt zwischen 1,2 und 9,0 bevorzugt zwischen 1,5 und 5,0. Voraussetzung ist hierbei, dass die Alkylphenol-Aldehydharze zumindest in anwendungsrelevanten Konzentrationen von 0,001 bis 1 Gew.-% öllöslich sind.

Geeignete Fettsäuren zur Herstellung der erfindungsgemäßen Alkylphenolharze haben bevorzugt 6 bis 40, insbesondere 10 bis 26 und speziell 12 bis 22 C-Atome. Die Alkenylreste und gegebenenfalls Alkylreste der Fettsäuren bestehen im wesentlichen aus Kohlenstoff und Wasserstoff. Sie können jedoch weitere Substituenten wie z.B. Hydroxy- oder Halogengruppen tragen, sofern diese den vorwiegenden Kohlenwasserstoffcharakter nicht beeinträchtigen. Bevorzugt sind Fettsäuren mit linearen und verzweigten Kohlenwasserstoffresten, besonders bevorzugt sind lineare Reste. Die Fettsäuren enthalten vorzugsweise mindestens eine Doppelbindung. Bevorzugt befindet sich diese nicht in α-β-Stellung zur Carboxylfunktion. Sie können mehrere Doppelbindungen, beispielsweise 2 oder 3 Doppelbindungen, enthalten und natürlicher oder synthetischer Herkunft sein. Bei mehrfach ungesättigten Carbonsäuren können deren Doppelbindungen isoliert oder auch konjugiert sein. Bevorzugt sind Mischungen aus zwei oder mehr ungesättigten Fettsäuren mit 10 bis 26 C-Atomen. In besonders bevorzugten Fettsäuremischungen enthalten mindestens 50 Gew.-%, speziell mindestens 75 Gew.-% wie beispielsweise mindestens 90 Gew.-% der Fettsäuren eine oder mehrere Doppelbindungen. Die Jodzahlen der den erfindungsgemäßen Estern zugrunde liegenden Fettsäuren bzw. Fettsäuregemische liegen bevorzugt oberhalb 50 g J/100 g, besonders bevorzugt zwischen 60 und 190 g J/100 g, insbesondere zwischen 100 und 180 g J/100 g und speziell zwischen 120 und 180 g l/100 g Fettsäure bzw. Fettsäuregemisch.

Geeignete ungesättigte Fettsäuren sind beispielsweise Öl-, Eruca-, Palmitolein-, Myristolein-, Linol-, Linolen-, Elaeosterin-, Arachidon- und/oder Ricinolsäure. Bevorzugt werden erfindungsgemäß aus natürlichen Fetten und Ölen gewonnene Fettsäuremischungen wie z.B. Cocosnussöl-, Erdnussöl-, Fisch-, Leinöl-, Palmöl-, Rapsöl-, Ricinen-, Ricinusöl-, Rüböl-, Sojaöl-, Sonnenblumenöl-, Färberdistel- und Tallölfettsäure sowie daraus z.B. durch Destillation erhaltene Fraktionen eingesetzt.

Als Bestandteil der Fettsäuremischungen ebenfalls geeignet sind Dicarbonsäuren, wie Dimerfettsäuren und Alkyl- sowie Alkenylbernsteinsäuren mit C₈-C₅₀-Alk(en)ylresten, bevorzugt mit C₈-C₄₀-, insbesondere mit C₁₂-C₂₂-Alk(en)ylresten. Die Alkylreste können linear wie auch verzweigt (oligomerisierte Alkene, Polyisobutylen) und gesättigt oder ungesättigt sein. Bevorzugt sind Anteile von bis zu 10 Gew.-%, insbesondere weniger als 5 Gew.-% bezogen auf den Bestandteil A).

Bevorzugte Fettsäuremischungen enthalten untergeordnete Mengen, d.h. bis zu 20 Gew.-%, bevorzugt weniger als 10%, insbesondere weniger als 5 % und speziell weniger als 2 % gesättigter Fettsäuren wie beispielsweise Laurin-, Tridecan-, Myristin-, Pentadecan-, Palmitin-, Margarin-, Stearin-, Isostearin-, Arachin- und Behensäure.

Die Fettsäuren können weiterhin untergeordnete Mengen von bis zu 20 Gew.-%, bevorzugt bis zu 25 Gew.-%, wie beispielsweise 1 bis-5 Gew.-% Harzsäuren wie beispielsweise Abietinsäure, Dihydroabietinsäure, Tetrahydroabietinsäure, Dehydroabietinsäure, Neoabietinsäure, Pimarsäure, Levopimarsäure, Palustrinsäure sowie deren Derivate enthalten. Besonders bevorzugt enthalten sie weniger als 2 Gew.-% und speziell sind sie im wesentlichen frei von Harzsäuren.

Besonders geeignete Fettsäureester zur Herstellung der erfindungsgemäßen Alkylphenolharze sind solche, die sich von oben genannten Fettsäuren und niederen Alkoholen mit 1 bis 5 Kohlenstoffatomen ableiten, wobei Ester der oben genannten Fettsäuren mit niederen Alkoholen mit 1 bis 5 Kohlenstoffatomen und nur einer OH-Gruppe besonders bevorzugt sind. Beispiele für besonders geeignete Alkohole sind Methanol, Ethanol und Propanol, insbesondere Methanol. Besonders geeignete Fettsäureester sind von pflanzlichen Ölen abgeleitete Ester wie Rapsölsäuremethylester, Sonnenblumenölsäuremethylester, Sojafettsäuremethylester, Palmölsäuremethylester sowie Tallölfettsäuremethylester. Auch Ester mehrwertiger Alkohole mit 2 bis 6 OH-Gruppen, bevorzugt mit 2 oder 3 OH-Gruppen wie beispielsweise Ethylenglykol, Diethylenglykol, Glycerin und Trimethylolpropan sind geeignet.

Die Fettsäureester sind aus Alkoholen und Fettsäuren in bekannter Weise durch Veresterung herstellbar. Bevorzugt ist die Umesterung natürlich vorkommender Fette und Öle mit niederen Alkoholen und insbesondere mit Methanol, wobei als Nebenprodukt Glycerin entsteht. Bevorzugt sind solche Ester, die aus einem Fettsäuregemisch herstellbar sind.

Die erfindungsgemäßen Verbindungen werden üblicherweise in Konzentrationen von 0,5 bis 10.000 ppm, vorzugsweise von 2 bis 2.000 ppm und insbesondere von 5 bis 500 ppm bezogen auf das zu additivierende Öl eingesetzt.

Für den Einsatz als Demulgator besonders bevorzugt sind erfindungsgemäße Alkylphenol-Formaldehydharze mit C₂-C₄₀-Alkylresten des Alkylphenols, bevorzugt mit C₄-C₂₀-Alkylresten wie beispielsweise C₆-C₁₂-Alkylresten. Die Alkylreste können linear oder verzweigt sein, bevorzugt sind sie verzweigt. Besonders geeignete Alkylphenol-Aldehydharze leiten sich von verzweigten Alkylresten mit 4 bis 9 C-Atomen ab. Das mittels GPC bestimmte mittlere Molekulargewicht liegt bevorzugt zwischen 700 und 20.000, insbesondere zwischen 800 und 10.000 wie beispielsweise zwischen 1.000 und 3.000 g/Mol. Der Polymerisationsgrad n beträgt vorzugsweise 1 bis 20, insbesondere 2 bis 15 wie beispielsweise 5 bis 10. Die endständigen Reste R¹ leiten sich bevorzugt von niederen Alkylestern ungesättigter Fettsäuren und insbesondere von Methylestern pflanzlicher Öle und Fette ab. In einer bevorzugten Ausführungsform leiten sich die Reste R¹ von Fettsäuren ab, die nach der Kondensation mit Alkylenoxiden umgesetzt werden. Der Alkoxilierungsgrad beträgt bis zu 500, bevorzugt 1 bis 100 und insbesondere 2 bis 20 mol Alkylenoxid pro OH-Gruppe bzw. Carboxylgruppe. Besonders bevorzugte Alkylenoxide sind Ethylenoxid, Propylenoxid und deren Mischungen. Bei gemischten Alkoxilaten kann die Alkoxilierung entweder sequentiell oder statistisch erfolgen. Das molare Verhältnis zwischen Ethylenoxid und Propylenoxid liegt bevorzugt zwischen 1:10 und 10:1. Die Dosierraten liegen bevorzugt zwischen 0,1 und 1.000 ppm, bevorzugt zwischen 1 und 500 ppm und insbesondere zwischen 10 und 200 ppm bezogen auf den Ölgehalt der Emulsion.

Für den Einsatz als Asphaltendispergatoren besonders bevorzugt sind erfindungsgemäße Alkylphenol-Formaldehydharze, deren Alkylreste 1 bis 30 C-Atome bzw. im Falle von Alkenylresten 2 bis 30 C-Atome und bevorzugt 4 bis 24 C-Atome tragen. Kürzere Alkyl- bzw. Alkenylreste mit beispielsweise 3 bis 12 C-Atomen sind bevorzugt verzweigt, längere Alkyl- und Alkenylreste mit beispielsweise mehr als 12 C-Atomen sind bevorzugt linear. Der Rest R³ steht bevorzugt für Wasserstoff. Der Polymerisationsgrad (n) liegt hier bevorzugt zwischen 2 und 50, bevorzugt zwischen 3 und 20 Alkylphenoleinheiten. Das mittels GPC gegen Poyl(styrol)-Standards bestimmte mittlere Molekulargewicht Mₙ liegt bevorzugt zwischen 700 und 15.000, bevorzugt zwischen 800 und 7.000 und insbesondere zwischen 1.000 und 2.500 g/mol. Die endständigen Reste R¹ leiten sich bevorzugt von niederen Alkylestern ungesättigter Fettsäuren und insbesondere von Methylestern pflanzlicher Öle und Fette ab. Für die Verwendung als Asphaltendispergatoren werden bezogen auf das zu additivierende Öl bevorzugt Dosierraten von 5 bis 5.000 ppm, insbesondere von 10 bis 2.000 ppm wie beispielsweise von 20 - 200 ppm eingesetzt.

Für den Einsatz als Paraffininhibitor zur Verbesserung der Kaltfließfähigkeit von Rohölen und davon abgeleiteten Produkten besonders bevorzugt sind erfindungsgemäße Alkylphenol-Formaldehydharze, deren Alkylreste 12 bis 100 C-Atome, bevorzugt 18 bis 60 C-Atome wie beispielsweise 22 bis 50 C-Atome tragen. Für schwere Rohöle und daraus hergestellte, Destillationsrückstände enthaltende Produkte mit einem hohen Gehalt an langkettigen n-Paraffinen mit mehr als 30 C-Atomen haben sich insbesondere Alkylphenol-Formaldehydharze, deren Alkylreste mehr als 30 C-Atome tragen, besonders bewährt. Bevorzugt sind die Alkylreste linear. In einer weiteren bevorzugten Ausführungsform leiten sich die Alkylreste von Oligomeren oder Polymeren von Olefinen mit 2 bis 6-C-Atomen wie beispielsweise von Poly(isobutylen) ab und sind somit verzweigt. Die sich von Oligo- und Polymeren niederer Olefine ableitenden Alkylreste haben bevorzugt ein Molekulargewicht von 500 bis 3.000 g/mol. Der Polymerisationsgrad (n) liegt hier bevorzugt zwischen 2 und 50, bevorzugt zwischen 3 und 20 Alkylphenoleinheiten. Das mittels GPC gegen Poly(styrol)-Standards bestimmte mittlere Molekulargewicht Mn liegt bevorzugt zwischen 1.000 und 20.000 g/mol und insbesondere zwischen 2.000 und 6.000 g/mol. Der Rest R³ steht bevorzugt für Wasserstoff. Die endständigen Reste R¹ leiten sich bevorzugt von niederen Alkylestern ungesättigter Fettsäuren und insbesondere von Methylestern pflanzlicher Öle und Fette ab. Bei dieser Verwendung liegen die Dosierraten üblicherweise zwischen 10 und 5.000 ppm, insbesondere zwischen 20 und 2.000 ppm wie beispielsweise zwischen 30 und 500 ppm.

Die erfindungsgemäßen Alkylphenol-Aldehydharze werden zwecks einfacher Handhabung bevorzugt als Konzentrate eingesetzt, die 10 bis 90 Gew.-% und bevorzugt 20 bis 60 Gew.-% an Lösemittel enthalten Geeignete Lösemittel sind höher siedende aliphatische Kohlenwasserstoffe, aromatische Kohlenwasserstoffe, Alkohole, Ester, Ether und deren Gemische. Unter ökologischen Gesichtspunkten sind als Lösemittel jedoch die auch als Reaktionsmedium zur Herstellung der erfindungsgemäßen Alkylphenol-Aldehydharze geeigneten Fettsäuren sowie deren Derivate und insbesondere die oben genannten Fettsäureester besonders bevorzugt.

Die erfindungsgemäßen Alkylphenol-Aldehydharze können allein oder auch zusammen mit anderen Additiven verwendet werden. So haben sich für die Verwendung als Stockpunkterniedriger zum Beispiel der gemeinsame Einsatz mit Alkylphenolharzen gemäß Stand der Technik, mit Poly(alkylacrylaten), Poly(alkylmethacrylaten), Ethylen-Vinylester-Copolymeren, mit veresterten Copolymeren aus Dicarbonsäuren und Olefinen wie auch mit anderen Entwachsungshilfsmittel besonders bewährt. Für die Verwendung als Asphaltendispergator haben sich die gemeinsame Verwendung mit Alkylphenolharzen gemäß Stand der Technik, mit Alkylsarkosinaten, mit Alkylphosphonsäureestern wie auch mit Umsetzungsprodukten aus Poly(isobutenyl)bernsteinsäureanhydriden und Poly(aminen) bzw. Polyolen wie beispielsweise Poly(glycerin), besonders bewährt. Für den Einsatz als Demulgator haben sich die gemeinsame Verwendung mit Alkylphenolharzen gemäß Stand der Technik, mit vernetzten Blockcopolymeren aus Ethylenoxid und Propylenoxid sowie mit alkoxilierten Poly(alkylenaminen) besonders bewährt.

Darüber hinaus können die erfindungsgemäßen Alkylphenol-Aldehydharze gemeinsam mit weiteren Additiven wie Antioxidantien, Dehazern, Dispergatoren, Entschäumern, Korrosionsinhibitoren, Naphthenatinhibitoren, und/oder Zusätzen zur Erniedrigung der Wax-Appearance-Temperature eingesetzt werden.

Die erfindungsgemäßen Alkylphenol-Aldehydharze sind geeignet, die Eigenschaften von Rohölen und davon abgeleiteten Produkten zu verbessern. Unter abgeleiteten Produkten sind hier die aus Rohöl hergestellten, Destillationsrückstände enthaltenden Mineralölfraktionen, wie schweres Heizöl, Fuel Oil, Bunker C-Öl und Bitumen, zu verstehen. Insbesondere solche erfindungsgemäßen Alkylphenolharze, deren phenolische Hydroxylgruppe alkoxiliert ist, sind zur Trennung von Wasser-in-Öl-Emulsionen geeignet, wie sie zum Beispiel bei der Rohölförderung aber auch bei der Feinentsalzung von Rohölen in der Raffinerie anfallen. Des weiteren sind sie geeignet, ausgefallene und an Oberflächen von Aggregaten oder Förderleitungen anhaftende Paraffine wieder in Lösung zu bringen.

Die erfindungsgemäßen Alkylphenol-Aldehydharze sind weiterhin zur Dispergierung von Asphaltenen und/oder Paraffinwachsen in Rohölen und davon abgeleiteten Produkten geeignet, wobei ihre Wirksamkeit gegenüber den Additiven des Standes der Technik überlegen ist. Dabei senken sie zum einen den Eigenstockpunkt der additivierten Öle wie auch den die Fließgrenze, was zum Beispiel beim Wiederanfahren von Pipelines von großer Bedeutung ist.

Besonders geeignet sind sie für die Verbesserung der Eigenschaften von Rohölen und daraus hergestellten Destillationsrückstände enthaltenden Mineralölfraktionen wie schweres Heizöl, Fuel Oil, Bunker C-Öl und Bitumen.

Durch Verwendung nachwachsender Rohstoffe als Reaktionsmedium und Lösemittel haben die erfindungsgemäßen Alkylphenol-Aldehydharze eine verbesserte Umweltverträglichkeit. So ist die Bioabbaubarkeit der erfindungsgemäßen Alkylphenol-Aldehydharze deutlich höher als die der Additive des Standes der Technik.

Bei der Handhabung während Herstellung und Verarbeitung führen die erfindungsgemäßen Alkylphenol-Aldehydharze zu weniger gesundheitlichen Belastungen bei den damit beauftragten Personen. Darüber hinaus führen sie bei Produktaustritten z. B. beim Umfüllen oder bei der Anwendung zu weniger Umweltbelastungen als die bekannten Additive des Standes der Technik.

### Beispiele

Folgende Additive wurden eingesetzt:
A) Herstellung eines sauer katalysierten Nonylphenol-Formaldehydharzes in Rapsölsäuremethylester
   In einer 1 L Rührapparatur mit Wasserabscheider und N₂-Strom wurden 241 g Nonylphenol, 82 g Rapsölsäuremethylester und 1,6 g Alkylbenzolsulfonsäure vorgelegt. Die Mischung wurde unter Rühren auf 120°C erwärmt. Nun wurde hierzu 90 g 35%ige Formaldehydlösung zugetropft und das Reaktionswasser abdestilliert. Nach dem Zutropfen wurde auf 145°C aufgeheizt und die Reaktionsmischung noch 1 h bei 145°C gerührt. Nach Abkühlen auf 100°C wurden weitere 126 g Rapsölmethylester zugegeben.
   Das erhaltene Polymer hatte ein Molekulargewicht Mw von 2.700 g/mol und eine Säurezahl von 0,5 mg KOH/g. Im ¹³C-NMR-Spektrum (500 MHz, Lösemittel CDCl₃) des Polymers nach Entfernen des Lösemittels zeigen Signale bei 174 und 51,5 ppm die Anwesenheit eines Methylesters, Signale bei 130 ppm die Anwesenheit olefinischer Doppelbindungen und zusätzliche Signale im Bereich von 8 bis 42 ppm die Anwesenheit von längeren Alkylresten.
B) Herstellung eines sauer katalysierten Dodecylphenol-Formaldehydharzes in Rapsölsäuremethylester
   In einer 500 mL Rührapparatur mit Wasserabscheider und N2-Strom wurden 124,4 g Dodecylphenol, 132,0 g Rapsölsäuremethylester und 1,4 g Alkylbenzolsulfonsäure vorgelegt. Die Mischung wurde unter Rühren auf 120°C erwärmt. Nun wurde hierzu 42,2 g 35 %ige Formaldehydlösung zugetropft und das Reaktionswasser abdestilliert. Nach dem Zutropfen wurde 1 h bei 120°C gerührt, dann auf 145°C aufgeheizt und die Reaktionsmischung noch 1 h bei dieser Temperatur gerührt.
   Das erhaltene Polymer hatte ein Molekulargewicht Mw von 3200 g/mol und eine Säurezahl von 0,3 mg KOH/g. Im 13C-NMR-Spektrum (500 MHz, Lösemittel CDCl3) des Polymers nach Entfernen des Lösemittels zeigen Signale bei 174 und 51,5 ppm die Anwesenheit eines Methylesters, Signale bei 130 ppm die Anwesenheit olefinischer Doppelbindungen und zusätzliche Signale im Bereich von 8 bis 42 ppm die Anwesenheit von längeren Alkylresten.
C) Herstellung eines sauer katalysierten C_{20/24}-Alkylphenol-Formaldehydharzes in Rapsölsäuremethylester
   In einer 500 mL Rührapparatur mit Wasserabscheider und N2-Strom wurden 115,7 g C_{20/24}-Alkylphenol und 158,3 g Rapsölsäuremethylester vorgelegt. Die Mischung wurde unter Rühren auf 120°C erwärmt. Nun wurde hierzu 26,0 g 35 %ige Formaldehydlösung zugetropft und das Reaktionswasser abdestilliert. Nach dem Zutropfen wurde 1 h bei 120°C gerührt, dann auf 145°C aufgeheizt und die Reaktionsmischung noch 1h bei dieser Temperatur gerührt.
   Das erhaltene Polymer hatte ein Molekulargewicht Mw von 2500 g/mol und eine Säurezahl von 0,3 mg KOH/g. Im 13C-NMR-Spektrum (500 MHz, Lösemittel CDCl3) des Polymers nach Entfernen des Lösemittels zeigen Signale bei 174 und 51,5 ppm die Anwesenheit eines Methylesters, Signale bei 130 ppm die Anwesenheit olefinischer Doppelbindungen und zusätzliche Signale im Bereich von 8 bis 42 ppm die Anwesenheit von längeren Alkylresten.
D) Herstellung eines sauer katalysierten Nonylphenol-Formaldehydharzes in Tallölfettsäure
   In einer 500 mL Rührapparatur mit Wasserabscheider und N2-Strom wurden 96,3 g Nonylphenol, 66,8 g Tallölfettsäure und 0,64 g Alkylbenzolsulfonsäure vorgelegt. Die Mischung wurde unter Rühren auf 120°C erwärmt. Nun wurde hierzu 36,2 g 35 %ige Formaldehydlösung zugetropft und das Reaktionswasser abdestilliert. Nach dem Zutropfen wurde auf 145°C aufgeheizt und die Reaktionsmischung noch 1 h bei 145°C gerührt.
   Das erhaltene Polymer hatte ein Molekulargewicht Mw von 2100 g/mol. Im 13C-NMR-Spektrum (500 MHz, Lösemittel CDCl3) des Polymers nach Entfernen des Lösemittels zeigen Signale bei 178 ppm die Anwesenheit einer Carbonsäure, Signale bei 130 ppm die Anwesenheit olefinischer Doppelbindungen und zusätzliche Signale im Bereich von 8 bis 42 ppm die Anwesenheit von längeren Alkylresten.
E) Unter saurer Katalyse in Solvent Naphtha in Analogie zu A1 hergestelltes Nonylphenol-Formaldehydharz (Vergleichsbeispiel). Mw = 2400 g/mol, 50 %ig in Solvent Naphtha
F) Unter saurer Katalyse in Solvent Naphtha in Analogie zu A3 hergestelltes C_{20/24}-Alkylphenol-Formaldehydharz (Vergleichsbeispiel). Mw = 2700 g/mol, 50 %ig in Solvent Naphtha

### Wirksamkeit der Additive als Asphaltendispergatoren

Die Dispergierung bzw. das Ausfallen von Asphaltenen hängt von der Natur des Kohlenwasserstoffmediums ab. Asphaltene sind in aromatischen, aber nicht in aliphatischen Kohlenwasserstoffen löslich. Somit können Dispergatoren getestet werden, indem man das Öl oder extrahierte Asphaltene in einem aromatischen Lösemittel löst und indem man dann einen aliphatischen Kohlenwasserstoff zugibt, um einen Niederschlag zu erzeugen. In Abhängigkeit von der API-Dichte des eingesetzten asphaltenhaltigen Öls wird dieses mit Toluol im Verhältnis 1:3 bis 1:10 verdünnt. Die dispergierende Wirkung der Additive wird durch Bestimmung der "separability number" gemäß ASTM D7061-04 bestimmt. Eine niedrige separability number zeigt eine gute Stabilisierung der Asphaltene.

### Ergebnisse

Die Untersuchungen wurden an einem Fuel Oil No. 6 aus einer türkischen Raffinerie ausgeführt, das beträchtliche Mengen an Asphaltenen enthielt. Tabelle 1 zeigt die Ergebnisse des Dispergiertests nach Verdünnung des Öls mit Toluol im Verhältnis 1:9 mit verschiedenen erfindungsgemäßen Substanzen im Vergleich zu einem Alkylphenolharz des Standes der Technik.

**Tabelle 1: Asphaltendispergierung**

| Versuch | Additiv | Separability number |
|---|---|---|
| 1 | ohne | 7,09 |
| 2 | 100 ppm A | 0,13 |
| 3 | 100 ppm B | 0,22 |
| 4 | 100 ppm D | 0,15 |
| 5 (Vgl.) | 100 ppm E | 0,86 |

Die Versuche zeigen, dass die erfindungsgemäßen Alkylphenol-Aldehydharze hinsichtlich der Asphaltendispergierung den Additiven des Standes der Technik überlegen sind. Sie bewirken eine verbesserte Asphaltendispergierung oder, alternativ eine vergleichbare Asphaltendispergierung bei niedrigerer Additivdosierung.

### Wirksamkeit der Additive als Paraffininhibitoren

Die Verbesserung des Kaltfließverhaltens wird gemäß DIN ISO 3016 bestimmt. Ein niedriger Stockpunkt des Öls zeigt eine gute Wirksamkeit.
Die Messungen wurden an einem südamerikanischen Rohöl durchgeführt.

**Tabelle 2: Kaltfließverbesserung bei Einsatz von 200 ppm Dispergator**

| Additiv | Pour Point @ 500 ppm | Pour Point @ 1.000 ppm |
|---|---|---|
| ohne | 21°C | 21°C |
| C | 15°C | 6°C |
| F(Vergleich) | 18°C | 9°C |

## Patentansprüche

1. Rohöle und daraus hergestellte, Destillationsrückstände enthaltende Produkte, enthaltend Alkylphenol-Aldehydharze mit einer repetitiven Struktureinheit der Formel 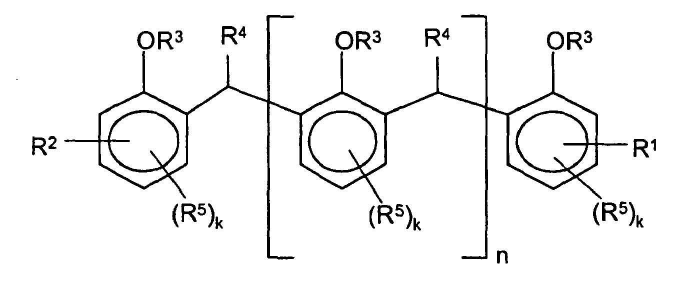 worin
R¹ für einen verzweigten Alkyl- oder Alkenylrest mit 10 bis 40 C-Atomen steht, der mindestens eine Carboxyl-, Carboxylat- und/oder Estergruppe trägt,
R² für Wasserstoff oder R¹
R³ für Wasserstoff oder eine Alkoxygruppe der Formel
-(A-O)ₘ - H,
A für eine C₂- bis C₄-Alkylengruppe,
m für eine Zahl von 1 bis 100,
R⁴ für Wasserstoff, einen C₁- bis C₁₁-Alkylrest oder eine Carboxylgruppe,
R⁵ für C₁-C₂₀₀-Alkyl oder -Alkenyl, O-R⁶ oder O-C(O)-R⁶,
R⁶ für C₁-C₂₀₀-Alkyl oder -Alkenyl,
n für eine Zahl von 1 bis 100 und
k für 1 oder 2 steht.

2. Rohöle und daraus hergestellte, Destillationsrückstände enthaltende Produkte nach Anspruch 1, worin R¹ für C₁₂ bis C₂₂-Alkyl oder -Alkenyl steht.

3. Rohöle und daraus hergestellte, Destillationsrückstände enthaltende Produkte nach Anspruch 1 und/oder 2, worin R³ für Wasserstoff steht.

4. Rohöle und daraus hergestellte, Destillationsrückstände enthaltende Produkte nach einem oder mehreren der Ansprüche 1 bis 3, worin A für eine Ethylen- und/oder Propylengruppe steht.

5. Rohöle und daraus hergestellte, Destillationsrückstände enthaltende Produkte nach einem oder mehreren der Ansprüche 1 bis 4, worin R⁴ für Wasserstoff steht.

6. Rohöle und daraus hergestellte, Destillationsrückstände enthaltende Produkte nach einem oder mehreren der Ansprüche 1 bis 5, worin R⁵ und R⁶ unabhängig voneinander für C₄- bis C₅₀-Alkyl stehen.

7. Rohöle und daraus hergestellte, Destillationsrückstände enthaltende Produkte nach einem oder mehreren der Ansprüche 1 bis 6, worin n für eine Zahl von 2 bis 50 steht.

8. Verwendung mindestens eines Alkylphenol-Aldehydharzes mit einer repetitiven Struktureinheit der Formel 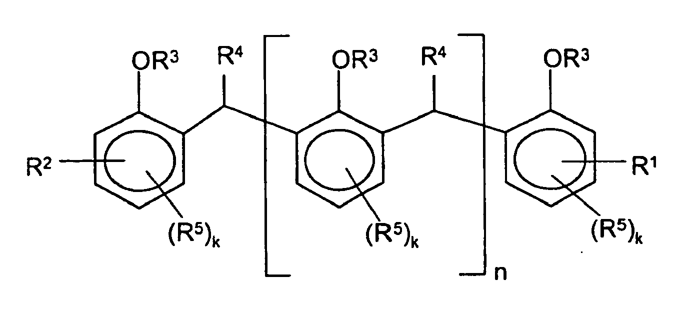 wie in einem oder mehreren der Ansprüche 1 bis 7 definiert, worin
R¹ für einen verzweigten Alkyl- oder Alkenylrest mit 10 bis 40 C-Atomen steht, der mindestens eine Carboxyl-, Carboxylat- und/oder Estergruppe trägt,
R² für Wasserstoff oder R¹
R³ für Wasserstoff oder eine Alkoxygruppe der Formel
-(A-O)ₘ-H,
A für eine C₂- bis C₄-Alkylengruppe,
m für eine Zahl von 1 bis 100,
R ⁴ für Wasserstoff, einen C₁- bis C₁₁-Alkylrest oder eine Carboxylgruppe,
R⁵ für C₁-C₂₀₀-Alkyl oder-Alkenyl, O-R⁶ oder O-C(O)-R⁶,
R⁶ für C₁-C₂₀₀-Alkyl oder -Alkenyl,
n für eine Zahl von 1 bis 100 und
k für 1 oder 2 steht
zur Spaltung von Emulsionen aus Wasser und Rohölen oder davon abgeleiteten, Destillationsrückstände enthaltenden Produkten.

9. Verwendung von Alkylphenol-Aldehydharze mit einer repetitiven Struktureinheit der Formel 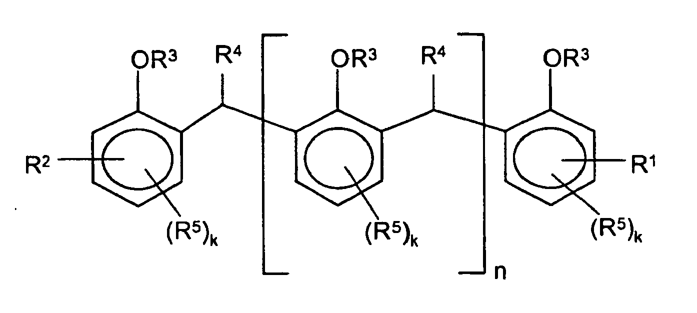 wie in einem oder mehreren der Ansprüche 1 bis 7 definiert, worin
R¹ für einen verzweigten Alkyl- oder Alkenylrest mit 10 bis 40 C-Atomen steht, der mindestens eine Carboxyl-, Carboxylat- und/oder Estergruppe trägt,
R² für Wasserstoff oder R¹
R³ für Wasserstoff oder eine Alkoxygruppe der Formel
-(A-O)ₘ-H,
A für eine C₂- bis C₄-Alkylengruppe,
m für eine Zahl von 1 bis 100,
R⁴ für Wasserstoff, einen C₁- bis C₁₁-Alkylrest oder eine Carboxylgruppe,
R⁵ für C₁-C₂₀₀-Alkyl oder -Alkenyl, O-R⁶ oder O-C(O)-R⁶,
R⁶ für C₁-C₂₀₀-Alkyl oder -Alkenyl,
n für eine Zahl von 1 bis 100 und
k für 1 oder 2 steht
zur Dispergierung von Asphaltenen in Rohölen und daraus abgeleiteten, Destillationsrückstände enthaltenden Produkten.

10. Verwendung mindestens eines Alkylphenol-Aldehydharzes mit einer repetitiven Struktureinheit der Formel 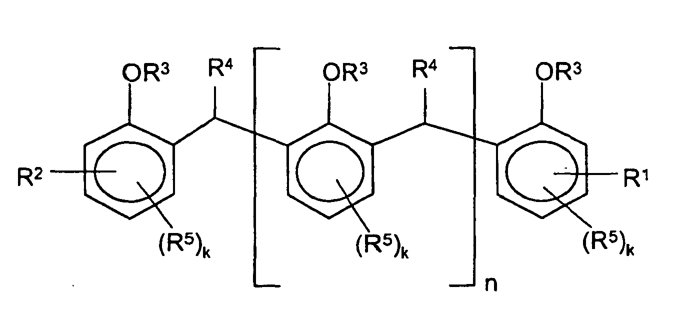 wie in einem oder mehreren der Ansprüche 1 bis 7 definiert, worin
R¹ für einen verzweigten Alkyl- oder Alkenylrest mit 10 bis 40 C-Atomen steht, der mindestens eine Carboxyl-, Carboxylat- und/oder Estergruppe trägt,
R² für Wasserstoff oder R¹
R³ für Wasserstoff oder eine Alkoxygruppe der Formel
-(A-O)ₘ-H,
A für eine C₂- bis C₄-Alkylengruppe,
m für eine Zahl von 1 bis 100,
R⁴ für Wasserstoff, einen C₁- bis C₁₁-Alkylrest oder eine Carboxylgruppe,
R⁵ für C₁-C₂₀₀-Alkyl oder -Alkenyl, O-R⁶ oder O-C(O)-R⁶,
R⁶ für C₁-C₂₀₀-Alkyl oder -Alkenyl,
n für eine Zahl von 1 bis 100 und
k für 1 oder 2 steht
zur Verbesserung der Kaltfließeigenschaften von Rohölen und daraus abgeleiteten, Destillationsrückstände enthaltenden Produkten.

## Claims

1. A crude oil or product which has been produced therefrom and comprises distillation residues, comprising alkylphenol-aldehyde resins having a repeat structural unit of the formula 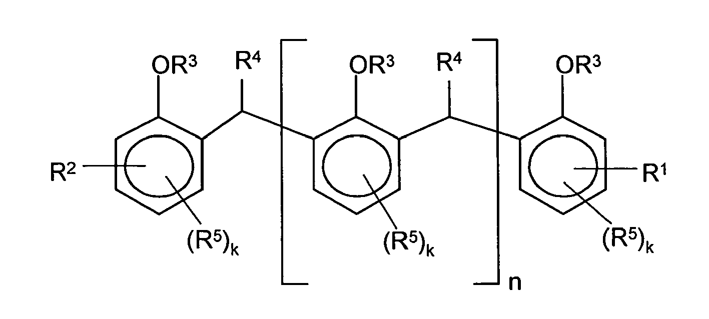 where
R¹ is a branched alkyl or alkenyl radical which has from 10 to 40 carbon atoms and bears at least one carboxyl, carboxylate and/or ester group,
R² is hydrogen or R¹
R³ is hydrogen or an alkoxy group of the formula
-(A-O)ₘ-H,
A is a C₂- to C₄-alkylene group,
m is from 1 to 100,
R⁴ is hydrogen, a C₁- to C₁₁-alkyl radical or a carboxyl group,
R⁵ is C₁-C₂₀₀-alkyl or -alkenyl, O-R⁶ or O-C(O)-R⁶,
R⁶ is C₁-C₂₀₀-alkyl or -alkenyl,
n is from 1 to 100 and
k is 1 or 2.

2. The crude oil or product which has been produced therefrom and comprises distillation residues as claimed in claim 1, wherein R¹ is C₁₂- to C₂₂-alkyl or -alkenyl.

3. The crude oil or product which has been produced therefrom and comprises distillation residues as claimed in claim 1 and/or 2, wherein R³ is hydrogen.

4. The crude oil or product which has been produced therefrom and comprises distillation residues as claimed in one or more of claims 1 to 3, wherein A is an ethylene and/or propylene group.

5. The crude oil or product which has been produced therefrom and comprises distillation residues as claimed in one or more of claims 1 to 4, wherein R⁴ is hydrogen.

6. The crude oil or product which has been produced therefrom and comprises distillation residues as claimed in one or more of claims 1 to 5, wherein R⁵ and R⁶ are each independently C₄- to C₅₀-alkyl.

7. The crude oil or product which has been produced therefrom and comprises distillation residues as claimed in one or more of claims 1 to 6, wherein n is from 2 to 50.

8. The use of at least one alkylphenol-aldehyde resin having a repeat structural unit of the formula 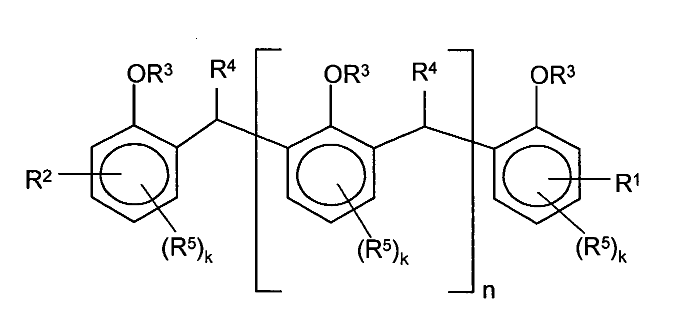 as defined in one or more of claims 1 to 7, where
R¹ is a branched alkyl or alkenyl radical which has from 10 to 40 carbon atoms and bears at least one carboxyl, carboxylate and/or ester group,
R² is hydrogen or R¹
R³ is hydrogen or an alkoxy group of the formula
-(A-O)ₘ-H,
A is a C₂- to C₄-alkylene group,
m is from 1 to 100,
R⁴ is hydrogen, a C₁- to C₁₁-alkyl radical or a carboxyl group,
R⁵ is C₁-C₂₀₀-alkyl or -alkenyl, O-R⁶ or O-C(O)-R⁶,
R⁶ is C₁-C₂₀₀-alkyl or -alkenyl,
n is from 1 to 100 and
k is 1 or 2
for splitting emulsions of water and crude oils or products which have been derived therefrom and comprise distillation residues.

9. The use of alkylphenol-aldehyde resins having a repeat structural unit of the formula 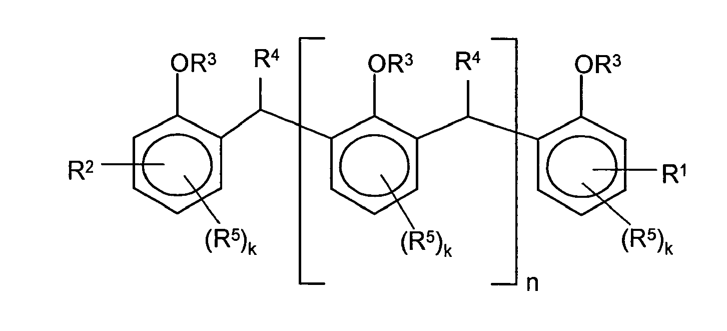 as defined in one or more of claims 1 to 7, where
R¹ is a branched alkyl or alkenyl radical which has from 10 to 40 carbon atoms and bears at least one carboxyl, carboxylate and/or ester group,
R² is hydrogen or R¹
R³ is hydrogen or an alkoxy group of the formula
-(A-O)ₘ-H,
A is a C₂- to C₄-alkylene group,
m is from 1 to 100,
R⁴ is hydrogen, a C₁- to C₁₁-alkyl radical or a carboxyl group,
R⁵ is C₁-C₂₀₀-alkyl or -alkenyl, O-R⁶ or O-C(O)-R⁶,
R⁶ is C₁-C₂₀₀-alkyl or -alkenyl,
n is from 1 to 100 and
k is 1 or 2
for dispersing asphaltenes in crude oils and products which have been derived therefrom and comprise distillation residues.

10. The use of at least one alkylphenol-aldehyde resin having a repeat structural unit of the formula 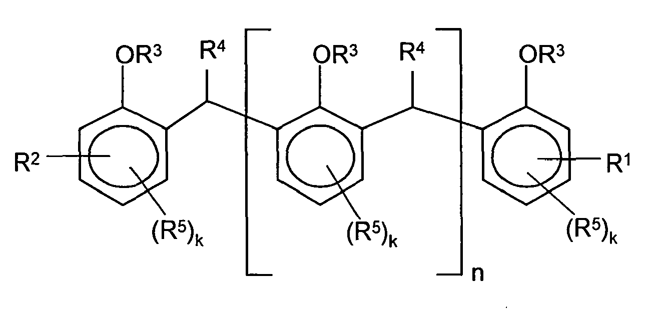 as defined in one or more of claims 1 to 7, where
R¹ is a branched alkyl or alkenyl radical which has from 10 to 40 carbon atoms and bears at least one carboxyl, carboxylate and/or ester group,
R² is hydrogen or R¹
R³ is hydrogen or an alkoxy group of the formula
-(A-O)ₘ-H,
A is a C₂- to C₄-alkylene group,
m is from 1 to 100,
R⁴ is hydrogen, a C₁- to C₁₁-alkyl radical or a carboxyl group,
R⁵ is C₁-C₂₀₀-alkyl or -alkenyl, O-R⁶ or O-C(O)-R⁶,
R⁶ is C₁-C₂₀₀-alkyl or -alkenyl,
n is from 1 to 100 and
k is 1 or 2
for improving the cold flow properties of crude oils and products which have been derived therefrom and comprise distillation residues.

## Revendications

1. Pétroles bruts et produits préparés à partir de ceux-ci, contenant des résidus de distillation, contenant des résines d'alkylphénol-aldéhyde avec une unité de structure répétitive de formule 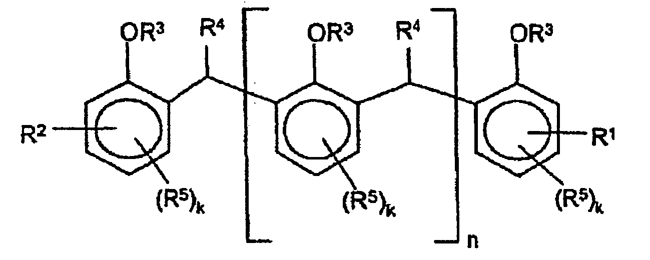 où
R¹ représente un radical alkyle ou alcényle ramifié comprenant 10 à 40 atomes de carbone, qui porte au moins un groupe carboxyle, carboxylate et/ou ester,
R² représente hydrogène ou R¹
R³ représente hydrogène ou un groupe alcoxy de formule
-(A-O)ₘ-H,
A représente un groupe C₂-C₄-alkylène,
m vaut un nombre de 1 à 100,
R⁴ représente hydrogène, un radical C₁-C₁₁-alkyle ou un groupe carboxyle,
R⁵ représente C₁-C₂₀₀-alkyle ou C₁-C₂₀₀-alcényle, O-R⁶ ou O-C(O)-R⁶,
R⁶ représente C₁-C₂₀₀-alkyle ou C₁-C₂₀₀-alcényle,
n vaut un nombre de 1 à 100, et
k vaut 1 ou 2.

2. Pétroles bruts et produits préparés à partir de ceux-ci, contenant des résidus de distillation selon la revendication 1, où R¹ représente C₁₂-C₂₂-alkyle ou C₁₂-C₂₂-alcényle.

3. Pétroles bruts et produits préparés à partir de ceux-ci, contenant des résidus de distillation selon la revendication 1 et/ou 2, où R³ représente hydrogène.

4. Pétroles bruts et produits préparés à partir de ceux-ci, contenant des résidus de distillation selon l'une ou plusieurs des revendications 1 à 3, où A représente un groupe éthylène et/ou propylène.

5. Pétroles bruts et produits préparés à partir de ceux-ci, contenant des résidus de distillation selon l'une ou plusieurs des revendications 1 à 4, où R⁴ représente hydrogène.

6. Pétroles bruts et produits préparés à partir de ceux-ci, contenant des résidus de distillation selon l'une ou plusieurs des revendications 1 à 5, où R⁵ et R⁶ représentent, indépendamment l'un de l'autre, C₄-C₅₀-alkyle.

7. Pétroles bruts et produits préparés à partir de ceux-ci, contenant des résidus de distillation selon l'une ou plusieurs des revendications 1 à 6, où n vaut un nombre de 2 à 50.

8. Utilisation d'au moins une résine d'alkylphénol-aldéhyde présentant une unité de structure répétitive de formule 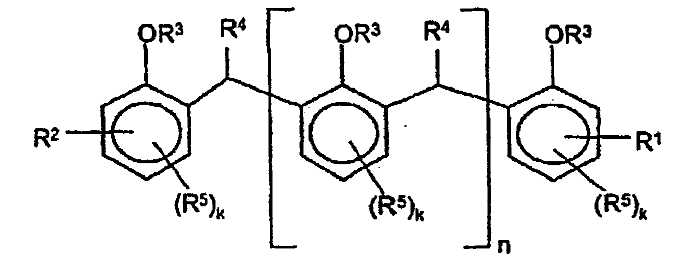 comme défini dans une ou plusieurs des revendications 1 à 7, où
R¹ représente un radical alkyle ou alcényle ramifié comprenant 10 à 40 atomes de carbone, qui porte au moins un groupe carboxyle, carboxylate et/ou ester,
R² représente hydrogène ou R¹
R³ représente hydrogène ou un groupe alcoxy de formule
-(A-0)ₘ-H,
A représente un groupe C₂-C₄-alkylène,
m vaut un nombre de 1 à 100,
R⁴ représente hydrogène, un radical C₁-C₁₁-alkyle ou un groupe carboxyle,
R⁵ représente C₁-C₂₀₀-alkyle ou C₁-C₂₀₀-alcényle, O-R⁶ ou O-C(O)-R⁶,
R⁶ représente C₁-C₂₀₀-alkyle ou C₁-C₂₀₀-alcényle,
n vaut un nombre de 1 à 100, et
k vaut 1 ou 2
pour la dissociation d'émulsions d'eau et de pétroles bruts ou des produits dérivés de ceux-ci, contenant des résidus de distillation.

9. Utilisation de résines d'alkylphénol-aldéhyde présentant une unité de structure répétitive de formule 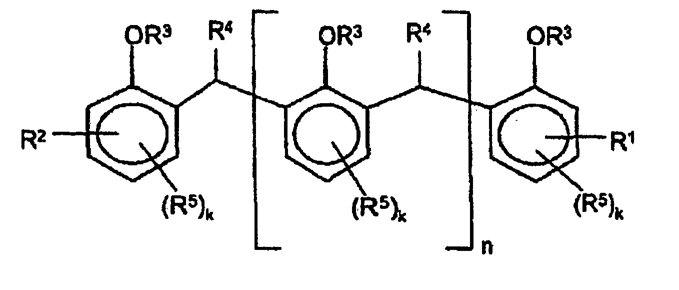 comme défini dans une ou plusieurs des revendications 1 à 7, où
R¹ représente un radical alkyle ou alcényle ramifié comprenant 10 à 40 atomes de carbone, qui porte au moins un groupe carboxyle, carboxylate et/ou ester,
R² représente hydrogène ou R¹
R³ représente hydrogène ou un groupe alcoxy de formule
-(A-O)ₘ-H,
A représente un groupe C₂-C₄-alkylène,
m vaut un nombre de 1 à 100,
R⁴ représente hydrogène, un radical C₁-C₁₁-alkyle ou un groupe carboxyle,
R⁵ représente C₁-C₂₀₀-alkyle ou C₁-C₂₀₀-alcényle, O-R⁶ ou O-C(O)-R⁶,
R⁶ représente C₁-C₂₀₀-alkyle ou C₁-C₂₀₀-alcényle,
n vaut un nombre de 1 à 100, et
k vaut 1 ou 2
pour la dispersion d'asphaltes dans des pétroles bruts et des produits dérivés de ceux-ci, contenant des résidus de distillation.

10. Utilisation d'au moins une résine d'alkylphénol-aldéhyde présentant une unité de structure répétitive de formule 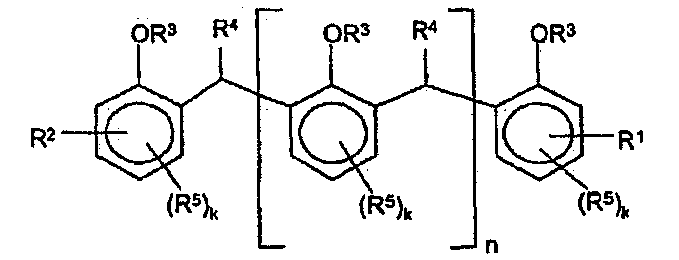 comme défini dans une ou plusieurs des revendications 1 à 7, où
R¹ représente un radical alkyle ou alcényle ramifié comprenant 10 à 40 atomes de carbone, qui porte au moins un groupe carboxyle, carboxylate et/ou ester,
R² représente hydrogène ou R¹
R³ représente hydrogène ou un groupe alcoxy de formule
-(A-O)ₘ-H,
A représente un groupe C₂-C₄-alkylène,
m vaut un nombre de 1 à 100,
R⁴ représente hydrogène, un radical C₁-C₁₁-alkyle ou un groupe carboxyle,
R⁵ représente C₁-C₂₀₀-alkyle ou C₁-C₂₀₀-alcényle, O-R⁶ ou O-C(O)-R⁶,
R⁶ représente C₁-C₂₀₀-alkyle ou C₁-C₂₀₀-alcényle,
n vaut un nombre de 1 à 100, et
k vaut 1 ou 2
pour améliorer les propriétés d'écoulement à froid de pétroles bruts et de produits dérivés de ceux-ci, contenant des résidus de distillation.
